# EUROPEAN PATENT SPECIFICATION

(11) **EP 0 343 535 B1**
(45) Date of publication and mention of the grant of the patent: **07.07.1993**
(21) Application number: 89109070.6
(22) Date of filing: 19.05.1989
(51) Int. Cl.: F23G 5/00, F23G 5/02, F23G 5/16, B09B 3/00

(54) **Method for treating waste materials**
Verfahren zur Abfallbehandlung
Procédé de traitement de déchets

(30) Priority: 25.05.1988 FI 882473
(43) Date of publication of application: 29.11.1989
(73) Proprietor: OUTOKUMPU OY, 00100 Helsinki 10 (FI)
(72) Inventor: Jormanainen, Martti Johannes, SF-02320 Espoo (FI); Laukkanen, Raimo Tapio, SF-02200 Espoo (FI); Pesonen, Herkko, SF-00330 Helsinki (FI)
(74) Representative: Zipse + Habersack

(56) References cited:
- EP-A- 0 179 045
- DE-A- 3 545 679
- DE-A- 3 546 431
- GB-A- 1 358 545
- US-A- 3 848 549
- PATENT ABSTRACTS OF JAPAN, vol. 7, no. 43 (C-152)[1188], 19th Feb. 1983, Page 54 C 152; & JP-A-57 194 097 (HITACHI ZOSEN K.K.) 29-11-1982

## Description

The invention relates to a method for treating waste materials biothermically, particularly municipal solid waste materials according to the preamble of claim 1.

One of the drawbacks of the consumption society is continuously increasing waste amounts and the environmental problems caused by waste materials. The municipal solid waste material which is produced in the town communities about 500 kg per one resident in a year, includes waste materials from the household economies and waste materials from shops, offices as well as from other service industries and industry except the hazardous waste materials.

If the waste material is not treated, space for dumping grounds is needed 1 m³ per one resident in a year. The problem is, that suitable areas for the dumping grounds are not available. The transporting costs of waste material even increase because the dumping grounds have to be placed far away from the cities.

The need for the space of the dumping ground can decisively be decreased by treating the waste material. If the waste material is treated by a biothermal treating method the need for the space of the dumping ground is only 1/10 compared to the need for the respective space of the dumping ground for untreated waste material.

In the biothermal method waste material is pretreated so that the biologically good-decomposable material, the so called compost fraction and the material suitable for combustion, the so called ,refuse-derived fuel are separated. In the pretreatment also magnetic metals are removed from the waste material.

It is possible to decompose the compost fraction biologically for example in the so called Wabio process in which as raw material are utilized the material of a municipal solid waste material suitable for the compost and the sludge from the sewage disposal plant. As final product are obtained humic earth and a considerable amount of biogas. The separate details of this Wabio process are described a.o. in the article: Loikala J., Jätteenkäsittely Wabioprosessissa; vaihtoehto perinteiselle kaatopaikkakäsittelylle (The treatment of waste material in the Wabio process; an alternative for a traditional treatment in a dumping ground), Kemia-Kemi 15 (1988) 3, pp. 280-282.

The refuse-derived fuel of the biothermal method is a combustion material homogenized in the pretreatment which heat content is about 20 % higher than the heat content of wooden chips. The refuse-derived fuel can advantageously be burned for example in the combination of a fluidized bed boiler and an after-burning chamber.

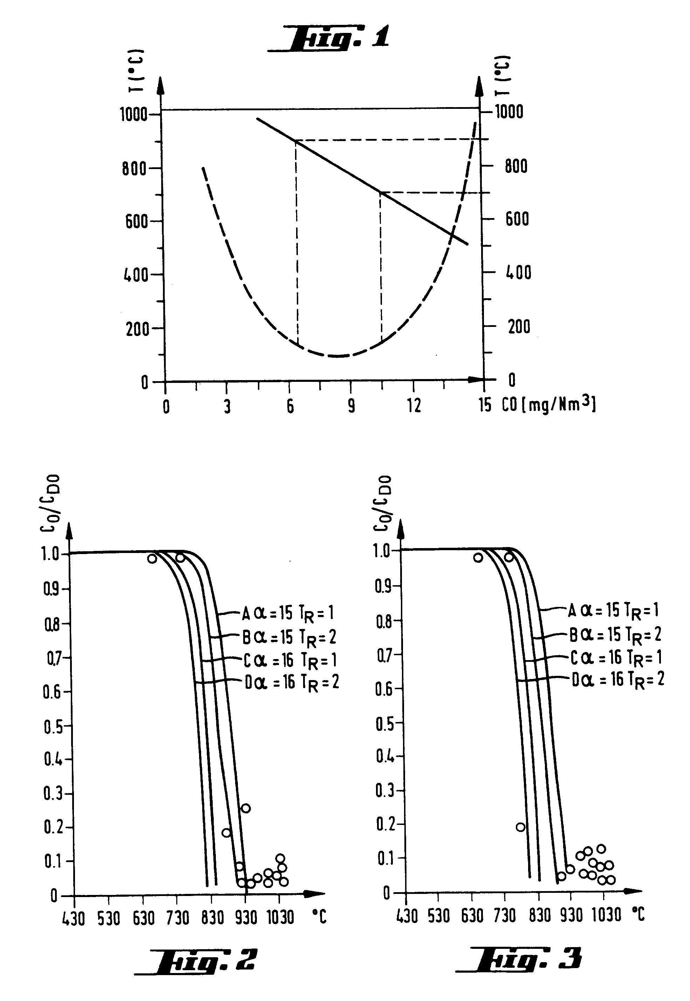

In order that the combustion of the municipal solid waste materials should be safe in regard to the environment, on one side a sufficient low combustion temperature is required so that nitrogen oxides are not simultaneously created when the contents of carbon monoxide are kept small, and on the other side a so high temperature is required that the organic compounds are fully decomposed. The figure 1 depicts the ratio of the combustion temperature and the content of carbon monoxide according to a Swedish paper; DRAV -project raport No. 33, Technology; Economics and Environmental Effects of Solid Waste Treatment; Final Report from the DRAV-project; Swedish Association of Public Cleaning and Solid Waste Management, July 1985. In the figure 1 the continuous line depicts the change on the combustion temperature as a function of the oxygen content in the combustion gas, and the curve drawn in the dotted line depicts the change on the carbon oxide content in the combustion gases as a function of the combustion temperature. It is seen in the figure 1 that the combustion temperature for the essentially complete combustion is in the range of 700 - 900 °C. The advantage of the essentially complete combustion is a low carbon monoxide content in the combustion gases which has an influence to the amount of the polyaromatic hydrocarbons (PAH) and the polychlorated dibenzo-p-dioxines (PCDD) and the dibenzofurans (PCDF) in the combustion gases.

In the figures 2 and 3 the measured and the theoretical ratios of dioxin (PCDD) and furan (PCDF) are depicted as the function of the combustion temperature in the incoming and in the outgoing gases determined according to the study described in the article: Cenerini R., Ghezzi U., The dioxin problem in Italian incinerators, Phoenix International 1987, 3, pp. 25-29. The continuous curves A, B, C and D depicted in the figures 2 and 3 describe the theoretical dioxin respectively furan ratios in the outgoing (C_{O}) and in the incoming (C_{DO}) gases in different combustion temperatures, when the delay time of the material T_{R} in the combustion state varies between 1 - 2 s and the constant α caused by the turbulence of the gases in the combustion chamber varies between 15 - 16. The points depicted in the figures 2 and 3 describe respectively the values measured under the study. It is seen in the figures 2 and 3 that when the combustion temperature is over 1100 °C the dioxins and furans in the gases to be treated should also be decomposed according to the calculated values. Thus environmental problems are prevented.

DE-A-3 546 431 discloses a method for treating waste material, particularly for municipal solid waste materials in which the waste material is first pretreated in order to divide the waste materials into a compost fraction and a refuse-derived fuel and in which the compost fraction is subject to a biological waste treatment and the refuse-derived fuel is subject to combustion at high temperature. As product of the biological waste treatments a biogas is obtained which is utilized as a burning material.

US-A-3 848 549 discloses a two stage incinerator wherein the second stage is built by a fuel-assisted afterburning chamber for the incineration of waste. The hot exhaust gases exiting the afterburning-chamber are benched with ambient air to provide pretreated air for the first or second stage combustion air, and can be used as fluidizing gas stream in the first stage.

The object of the present invention is to achieve a secure biothermal treating method for waste materials, particularly for municipal solid waste material, wherein harmful components are decomposed to a substantially great extend.

This object is obtained in a method according to the preamble of claim 1 by means of the characterizing features of claim 1. Advantageous embodiments of the invention are subject-matter of the subclaims.

When applying the invention, the compost fraction obtained in the mechanical pretreatment of the waste material is treated in a biological waste treatment whereof the biogas obtained is recovered and is utilized in the treatment of the refuse-derived fuel created in the mechanical pretreatment of the waste material. The refuse-derived fuel is treated in a high temperature and is fed for example into a fluidized bed boiler with a working-temperature between 800 - 900 °C. Then in the chamber an essentially complete combustion occures and therefore the carbon monoxide content in the exhaust gases is small. For the same reason the ash created is not smelted and is easily removable from the chamber. For the combustion gases of the fluidized bed boiler it is also performed after-burning in a special after-burning chamber where the temperature is maintained between 1000 - 1200 °C. For the advantageous maintaining of the temperature and for the sufficient burning of the components harmful for the environment which are possibly present in the combustion gases according to the invention at least a part of the biogas created in the biological compost fraction process is fed into the after-burning chamber.

According to invention when using biogas as a burning material in the after-burning chamber for combustion of the combustion gases of the refuse-derived fuel the temperature can be adjusted advantageously for the essentially complete burning and decomposing of the harmful components, as the polyaromatic hydrocarbons (PAH) and the polychlorated dibenzo-p-dioxines (PCDD) and the dibenzo-furans (PCDF), which are possibly present in the municipal solid waste material.

The after-burning chamber used in the method according to the invention is shaped to form an essentially closed system with the fluidized bed boiler used in the treatment of the refuse-derived fuel so that the gas flows essentially downwards after passing the connection between the fluidized bed boiler and the after-burning chamber. The biogas used as a burning material in the after-burning chamber, which biogas consists of 60 - 65 % methane and the rest carbon dioxide, is fed into the after-burning chamber through the burners positioned in the perpendicular direction to the direction of the gas flow in the after-burning chamber. The biogas used as a burning material is fed into the after-burning chamber when the uppermost feeding point is advantageously in a height that the increasing effect of the fed burning material to the temperature has not reached the connection between the fluidized bed chamber and the after-burning chamber. So it is avoided the effect of the at least partly smelted ash caused by the temperature for the feeding of the combustion gases.

When the gas flow is occuring essentially downwards in the after-burning chamber according to the method of the invention also the ash at least partly smelted under the treatment of the combustion gases can be removed in the lower part of the chamber while the gases pure of the components harmful for the environment can be conducted to a further treatment.

The invention is in the following explained in more details referring to the appended drawings, where
Figure 1 depicts the ratio between the burning temperature and the carbon monoxide content according to the DARV paper,
Figure 2 depicts the measured and theoretical dioxine ratios in the incoming and in the outgoing gases as a function of the combustion temperature,
Figure 3 depicts the measured and theoretical furan ratios in the incoming and in the outgoing gases as a function of the combustion temperature,
Figure 4 depicts one advantageous embodiment of the invention schematically,
Figure 5 depicts the combination of the fluidized bed boiler and the after-burning chamber used with the embodiment according to the figure 4 seen in partial side-view elevation.

The figures 1, 2 and 3 are already described in connection with the prior art.

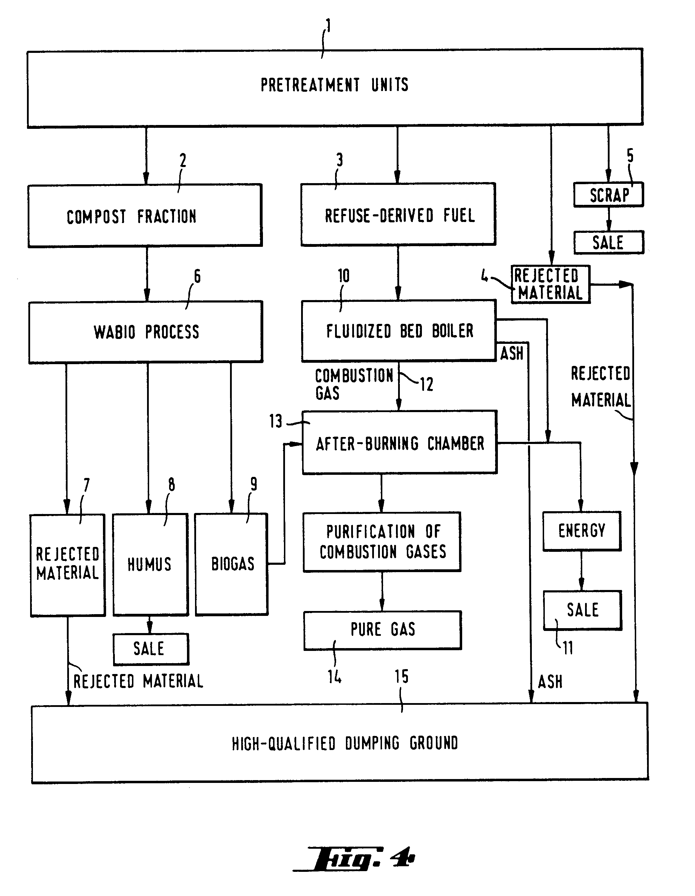

According to the figure 4 a mechanical pretreatment 1 is firstly performed for the municipal solid waste material to be treated by means of the method of the invention. In the pretreatment the waste material is divided in a compost fraction 2, in a refuse-derived fuel 3, in rejected material 4 and in scrap 5 possibly to be sold. For the compost fraction 2 a biological waste treatment is performed 6, whereof as a result it is created rejected material 7 worthless for the utility, humus 8 which is suitable for sale as well as the biogas 9 utilized in accordance with the invention. The temperature for this biogas is between 30 - 60 °C, advantageously 35 - 50 °C.

The refuse-derived fuel is conducted as a burning material in the fluidized bed boiler 10 which temperature is maintained between 800 - 900 °C in order to make possible the essentially complete burning of the refuse-derived fuel. The energy created in the combustion is recovered and it is utilized in different ways, a. o. as a sales product 11.

The combustion gases 12 from the fluidized bed boiler 10 are directly conducted into an after-burning chamber 13. In the after-burning chamber 13 the biogas 9 created in the biological waste treatment 6 of the compost fraction is utilized also as a burning material. The amount of the biogas to be fed in the after-burning chamber is advantageously about 50 % of the amount of the biogas produced, and then the temperature in the after-burning chamber 13 is maintained advantageously between 1000 - 1200 °C, the ash in the combustion gases is smelted at least partly and is removed from the gases. For the combustion gases of the after-burning chamber 13 a further treatment 14 is performed in order to create pure gas.

According to figure 4 only rejected material 4, 7 and the ashes from the fluidized bed boiler 10 and from the after-burning chamber 13 have to be transported to a dumping ground 15.

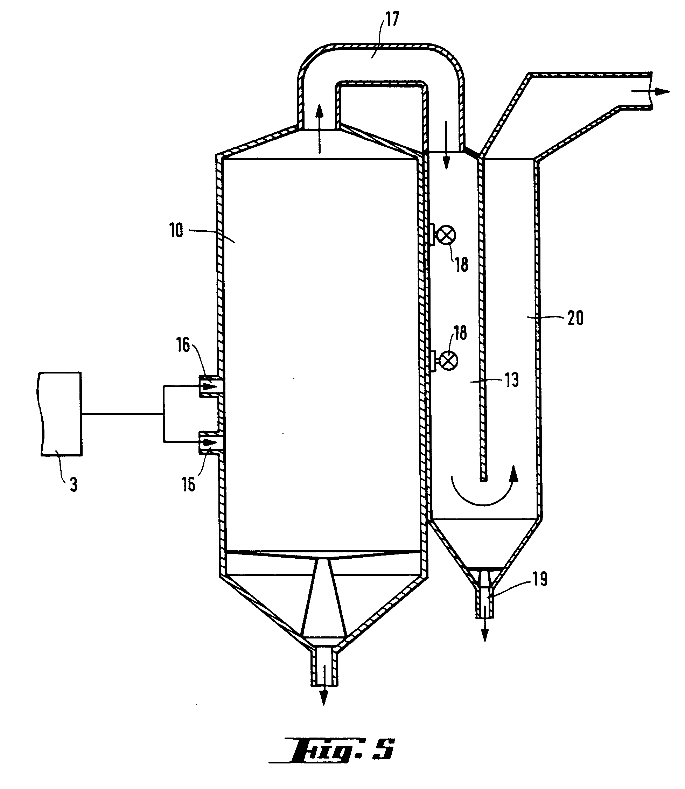

The refuse-derived fuel 3 in the figure 5 is fed into the fluidized bed boiler 10 through feeding openings 16. The gases created in the fluidized bed boiler 10 are conducted from the upper part of the chamber through a connection 17 to the upper part of the after-burning chamber 13. The biogas is fed into the gases flowing downwards into the after-burning chamber 13 through burners 18. One or more burners 18 may be provided and they can also be positioned in different height of the after-burning chamber 13. The ash in the gases of the after-burning chamber 13 and partly smelted is recovered in the lower part of the after-burning chamber 13 through a discharge opening 19. The purified gases are further conducted for the energy recovering in the screen section 20 of the after-burning chamber 13.

## Claims

1. Method for treating waste materials, particularly municipal solid waste materials in which method the waste material is firstly pretreated in order to divide the waste material into a compost fraction and a refuse-derived fuel and in which the compost fraction is treated in a biological waste tratment under obtaining a biogas as a burning material, and the refuse-derived fuel is combusted at a high temperature,
characterised in,
that the exhaust gases obtained in the combustion of the refused-derived fuel (3) are burned in an after-burning chamber (13) at temperatures between 1000°C and 1200°C, and that the biogas is supplied to the afterburning-chamber (13) as fuel in order to allow a close temperature control.

2. Method according to claim 1, **characterized** in that the burning material is fed into the upper part of the after-burning chamber (13).

3. Method according to claims 1 or 2, **characterized** in that the amount of the burning material in the after-burning chamber (13) is about 50 % of the gas amount produced from the biologically decomposed material of the waste material.

4. Method acording to any previous claims, **characterized** in that the feeding temperature of the after-burning chamber (13) is between 30 - 60 °C, advantageously 35 - 50 °C.

## Patentansprüche

1. Verfahren zur Abfallbehandlung, vorzugsweise von städtischen festen Abfällen, bei dem der Abfall zuerst vorbehandelt wird, um ihn in eine Kompostfraktion und einen Abfallbrennstoff zu unterteilen und bei dem die Kompostfraktion in einer biologischen Abfallbehandlung unter Erzielung eines Biogases als Brennmaterial aufbereitet wird, und der Abfallbrennstoff bei hohen Temperaturen verbrannt wird,
dadurch **gekeenzeichnet,**
daß die bei der Verbrennung des Abfallbrennstoffs (3) erhaltenen Abgase in einer Nachbrennkammer (13) bei Temperaturen zwischen 1.000 und 1.200°C verbrannt werden, und daß das Biogas der Nachbrennkammer (13) als Brennstoff zugeführt wird, um eine genaue Temperatursteuerung zu ermöglichen.

2. Verfahren nach Anspruch 1,
dadurch **gekennzeichnet,**
daß das Brennmaterial dem oberen Teil der Nachbrennkammer (13) zugeführt wird.

3. Verfahren nach Anspruch 1 oder 2,
dadurch **gekennzeichnet,**
daß der Anteil des der Nachbrennkammer (13) zugeführten Brennmaterials ungefähr 50% des Gases beträgt, das aus der biologisch zersetzten Fraktion des Abfalls erhalten wird.

4. Verfahren nach einem der vorhergehenden Ansprüche,
dadurch **gekennzeichnet,**
daß die Zufuhrtemperatur der Nachbrennkammer (13) zwischen 30 und 60°C, vorzugsweise zwischen 35 und 50°C, beträgt.

## Revendications

1. Procédé pour traiter des déchets, en particulier des déchets solides municipaux, dans lequel les déchets sont d'abord pré-traités pour diviser ces déchets en une fraction de compost et en un combustible dérivé d'ordures et dans lequel la fraction de compost est traitée dans une unité de traitement biologique de déchets pour obtenir un biogaz comme matière combustible, et le combustible dérivé d'ordures est brûlé à une température élevée, caractérisé en ce que les gaz d'échappement obtenus dans la combustion du combustible (3) dérivé d'ordures sont brûlés dans une chambre de post-combustion (13) à des températures comprises entre 1000°C et 1200°C, et que le biogaz est envoyé dans la chambre de post-combustion (13) en tant que combustible pour permettre un contrôle étroit de la température.

2. Procédé suivant la revendication 1, caractérisé en ce que la matière combustible est envoyée dans la partie supérieure de la chambre de post-combustion (13).

3. Procédé suivant les revendications 1 ou 2, caractérisé en ce que la quantité de matière combustible dans la chambre de post-combustion (3) est d'environ 50% de la quantité de gaz produite à partir de la matière décomposée biologiquement des déchets.

4. Procédé suivant l'une quelconque des revendications précédentes, caractérisé en ce que la température d'alimentation de la chambre de post-combustion (3) est comprise entre 30 et 60°C, avantageusement entre 35 et 50°C.
